**Europäisches Patentamt**

(19) **European Patent Office**

**Office européen des brevets**

(11) Publication number: **0 008 947**

**B1**

(12) **EUROPEAN PATENT SPECIFICATION**

(45) Date of publication of patent specification: **07.04.82**

(21) Application number: **79301832.6**

(22) Date of filing: **05.09.79**

(51) Int. Cl.³: **C 04 B 11/00, B 28 B 1/00, C 01 F 11/46**

(54) Method of treating calcined gypsum and manufacture of gypsum board therefrom.

(30) Priority: **05.09.78 US 939624**

(43) Date of publication of application:
**19.03.80 Bulletin 80/6**

(45) Publication of the grant of the patent:
**07.04.82 Bulletin 82/14**

(84) Designated Contracting States:
**BE CH DE FR GB NL SE**

(56) References cited:
**BE - A - 864 882**
**DE - A - 2 049 028**
**DE - B2 - 1 771 625**
**GB - A - 1 387 178**
**US - A - 3 480 387**

(73) Proprietor: **UNITED STATES GYPSUM COMPANY**
**101 South Wacker Drive**
**Chicago, Illinois 60606 (US)**

(72) Inventor: **O'Neill, Eugene Edward**
**707 N. Second Street**
**Okeene, Oklahoma 73763 (US)**

(74) Representative: **Geering, Keith Edwin**
**REDDIE & GROSE 16 Theobalds Road**
**London WC1X 8PL (GB)**

Courier Press, Leamington Spa, England.

Method of treating calcined cypsum and manufacture of gypsum board therefrom

Continuously calcined gypsum (stucco), because of processing conditions in its preparation, differs in physical properties from stuccos made by other processes. When gypsum is continuously calcined, a high number of small fractures occur in the calcium sulfate particles. During wet mixing of continuously calcined gypsum with water to form a slurry, very small fractions of the calcium sulfate particles rapidly break from the particle because of the fissuring of the fractured particle. Thus, for example, the mean particle size of the continuously calcined gypsum particles after calcination may be approximately 19 microns, and during wet mixing of that stucco, 1 to 3 micron sized fragments will rapidly flake off the particles. This disintegration is a desirable characteristic in some respects, for it provides a high rate of hydration or "set suddenness", and a high ultimate strength of the set gypsum because of the high surface area of the fragments. This disintegration of the particles, however, also results in undesirable high water demand due to the much higher surface area of the stucco fragments.

In automated gypsum board manufacture, a large portion of the processing time and processing energy is devoted to removing excess water from the wet board. Considerable excess water is required in gypsum board manufacture to properly fluidize the calcined gypsum and obtain proper flow of the gypsum slurry. Thus, calcined gypsum made by continuous calcination may have a dispersed consistency of about 100—150 cc. "Dispersed consistency" for purposes of gypsum board manufacture in accordance with the present invention may be defined as the water volume required to give a standard viscosity or flow when 100 grams of calcined gypsum is dispersed by mechanical mixing in a high speed blender for 7 seconds, which is equivalent to that encountered in the board forming line. While the dispersed consistency may be expressed as a particular numeral figure, it will be appreciated that any particular number is variable from one processing line to the next depending on the particular stucco and the amount of flow for that stucco being most desirable for that particular processing line.

A dispersed consistency value of 100—150 cc. indicates a water requirement of about 85—100 parts of water per 100 parts of the calcined gypsum for an acceptable slurry in a modern automated gypsum board plant. The theoretical water required to convert the calcined gypsum (calcium sulfate hemihydrate or stucco) to set gypsum dihydrate if only 18.7% by weight on a pure basis. This leaves about 67% to about 82% of the water present in the gypsum slurry to be removed in drying the board. Ordinarily, gypsum board dryers in an automated gypsum board manufacturing line will remove this water, for example, by maintaining the temperature at about 204°C and requiring a drying time of about 40 minutes. Of course, the time temperature relationship is variable from one processing plant to another depending upon the particular gypsum source and processing equipment.

In addition, line speed of the board slurry is affected by the setting time and the set suddenness of the calcined gypsum slurry. Thus, calcined gypsum made by continuous calcination will ordinarily be adjusted to have a temperature rise set of about 8 minutes and a set suddenness rate of about 5°C per minute.

In the text of U.S. Patent Specification Nos. 4,117,070 and 4,153,373 there are described apparatus and processes for continuously treating calcined gypsum so as to lower the water demand and provide a treated mass which may be continuously fed into the slurry mixer of an automated gypsum board line. The treatment comprises thoroughly blending small amounts of water into the calcined gypsum, resulting in a damp but dry appearing material and allowing it to "heal" before usage in gypsum board production. By "healing" is meant allowing the small amounts of free water to remain on the calcined gypsum particle surface for a short period of time, about 1—10 minutes, and it is believed that this permits the fractures on the particles to fuse so as to resist subsequent disintegration of the particle into numerous micron sized fractions during slurry mixing. The healed stucco is particularly suitable for immediate utilization in gypsum board manufacture; however, if such material is not used right away, the set suddenness of the healed stucco begins to vary erratically. "Set suddenness", for purposes of the present invention, may be defined as the maximum rate of temperature rise of the exothermic stucco temperature-time curve. The development of set suddenness is important in providing adequate ultimate strength of the cast gypsum product.

It has been found that board manufactured by the process of adding a small amount of water to the calcined gypsum to reduce water demand is considerably weaker at the same board core density than if untreated calcined gypsum were used in making the board. The calcined gypsum produced by the continuous process, depending on the gypsum source, may be low in ultimate strength development, and the further reduction in ultimate strength resulting from the above-described processes of water treatment may produce an unacceptable board. Further, the water-treated calcined gypsum of such process should be used in gypsum board production immediately after healing or else dried after healing, for the water-treated calcined gypsum is not storage stable.

The present invention provides a method for treating calcined gypsum to reduce its water demand which comprises blending with the calcined gypsum a small amount (from about 1% to about 10% by weight of the calcined gypsum) of water, allowing the water treated calcined gypsum to heal, and grinding the healed calcined gypsum to increase the surface area of the healed calcined gypsum

2

particles. The treated product generally has properties e.g. set time, pouring consistency, rate of strength development, etc. that suit it particularly for use in gypsum board manufacture. The healed and ground calcium sulfate hemihydrate has lowered water demand (which permits significant energy savings in the manufacture of gypsum wallboard), generally without substantial impairment of its ability to exhibit acceptable ultimate strength products such as gypsum board cast therefrom, the treatment may reduce the water demand of the stucco by 20% or more, with cast products made therefrom having 90% or more of the strength of such products made from the untreated stucco. The preferred treated stucco is also stable on storage.

While it is known in the art that some improvement in cast strength is provided by grinding ordinary, completely dry stucco prior to mixing with water (U.S. Patent No. 3,480,387), it was expected that the reduced water demand advantages of the water treatment and healing process would be lost in grinding that material to produce strengths equivalent to untreated stucco material. One skilled in the art would expect the rigors of grinding to reopen the healed fissures and cause fractures in the particle's surface, thereby eliminating the water reduction advantage. It was also expected that evaporation of the free water by drying the treated stucco after healing would adversely affect the reduced water demand. However, it has now been found that the reduced water demand provided by water treatment and healing is not lost by grinding the water treated stucco after healing so as to increase the surface area of the healed stucco.

While it is only a theory of operation, it is not believed that in "healing", the small fractures in the calcined gypsum particles are fused to the particle by dissolution caused by the small amount of free water present for a short period of time on the particles' surface. In a sense, it is believed that the small amount of localized water on the surface of the particles, during the healing time acts to weld the fractures and fissures so that they resist rapidly breaking off of the particle into small fraction when the particle is later mixed with the larger quantities of water for hydration in gypsum board manufacture or slurrying during production of industrial plaster. Further, it is now believed that grinding of the healed particles creates fresh surface portions as the reactivation of surface sites to provide energy for set suddenness during subsequent hydration with mixing water.

The calcined gypsum feed material may be any product of conventional batch or continuous calcination from any gypsum source, such as natural rock or that derived from chemical processes, including blends of natural rock gypsum and chemical process gypsum. For use in gypsum board manufacture, it is particularly preferred that the feed material be continuously calcined gypsum which will generally have a dispersed consistency of about 100—150 cc. Of course, the dispersed consistency may vary depending upon the gypsum source and manufacturing procedures well known to those skilled in the art. It is preferred for the production of industrial bagged stucco that the gypsum be a high quality, white material, either natural rock or derived from chemical processes or blends thereof. As previously mentioned, the calcined gypsum feed material may be produced by batch or continuous kettle calcination, or by any other means such as calcined gypsum obtained from heated conveyor or rotary calciners, moving bed calciners, or suspended gas stream calciners such as heated cyclone calciners.

Clacined gypsum from natural rock will generally have a surface area of about 3,000—5,500 square centimeters per gram, determined by the air permeability method (Blaine), depending upon the calcining procedure and rock properties. Calcined gypsum derived from chemical processes will normally have a surface area of about 1,500—2,000 square centimeters per gram (Blaine). It is understood that the calcined gypsum feed material derived from chemical processes, preferably hemihydrate, may include materials that may already have been ground or partially reground for other purposes, such as to provide a particular dry case density/strength relationship.

The small amount of water to be added initially to the calcined gypsum material to carry out this invention is dependent primarily upon the degree of water demand reducing effect desired. Generally, it will be about 1—10% by weight of the total calcined gypsum feed. Maximum effectiveness of water demand reduction appears to be accomplished upon incorporation of about 3% of free water into the calcined gypsum but this may vary depending upon the temperature and properties of the calcined gypsum. This may be accomplished by adding the water to the total amount of calcined gypsum feed or by applying such treatment to only a portion and then recombining, with thorough blending, the water treated portion with the untreated portion of the calcined gypsum feed. Naturally, there may be some losses through evaporation, over spray and the like during the water addition, so in general, more than the 3% preferred amount is actually added. The water may be added to either hot calcined gypsum (e.g. immediately after calcining) or cooled calcined gypsum, with more water generally being required for warmer material than for cooled material. The 3% optimum addition of water is based upon calcined gypsum that has been cooled to approximately ambient or room temperature, and thus, as mentioned above, it is desirable to incorporate more than the optimum when heated material is being treated. The calcined gypsum should, however, be below about 104°C and preferably below 93°C for most effective treatment.

Any method to provide a limited and small amount of free water on the surface of the calcined gypsum may be employed. Ordinarily, liquid water will be added directly to the calcined gypsum; however, the water addition may also be carried out by adding steam and cooling the calcined gypsum to condense water onto the surface or by having the steam condensed by the previously cooled calcined gypsum particles. It is also possible, provided some strength loss can be tolerated, to add considerably more than the optimum amount of water, such as 10% by weight, particularly if the treated material will be used immediately to make board.

The water treated calcined gypsum is briefly healed, generally for around 1—17 minutes and more preferably around 2—4 minutes, immediately after treatment and before further processing. The duration of the healing depends upon the manner of the water addition and the size of the unit by which the water is incorporated. Large capacity, rapidly rotating beater or paddle type blenders, which are conventional to the art may be used to add the water. These generally require less healing time than smaller capacity, more slowly metered, continuous blenders. Generally, sufficient healing time may be provided while transporting the water treated calcined gypsum from the blender to the next processing station. For example, screw conveyors and other transporting means may be adjusted in their flow rate to provide the time required for healing after water treatment and before feeding the treated material to the grinding station or to the slurry mixer in board forming operations. Such conveying means may need to be adjusted to provide the proper healing time for the amount of water added in the blender. Lower amounts of water will generally require less healing time, which for about 3% by weight of water will be on the order of about 1—4 minutes.

The water treated and healed calcined gypsum is not stable, and therefore, it should be dried before storage for any prolonged period of time. Some drying may be desired if more than the optimum water is added during the water treatment or to protect against shutdowns in the continuous operation of a board making line, for drying enables the treated material to be stored without excessive localized hydration and subsequent impairment of the flow characteristics. The drying conditions (e.g. temperature and time) should be selected so as not to remove the chemically combined water. It is generally preferred to avoid drying if at all possible in order to save time and energy; however, if drying is found to be necessary or desirable, it should be performed before grinding. It is possible to water treat the calcined gypsum, heal it, dry it, store it for a period of time, and subsequently grind the treated material and still obtain the advantages (reduced water demand and recapture of strength properties) of this invention. If the water treated and healed calcined gypsum is to be used immediately in the production of gypsum board, then it is usually not necessary to dry the treated material before grinding.

If the treated material is not to be used immediately in production, as when bagged plasters are to be made, it is preferred to dry thoroughly the material to provide storage stability. This also permits selective mixing with different additives in forming the various types of bagged plasters or different types of gypsum board. Thus, the drying procedure to be applied to a particular water treated material will be highly variable depending upon the degree of applicability of the above factors. In general, drying can be carried out by subjecting the healed calcined gypsum to hot gases (e.g. hot air ranging in temperature from about 149°C to 371°C) for several seconds to several minutes, preferably up to about 10 minutes in a continuous process.

In continuous operations, healing and drying may be performed sequentially as by passing the water treated stucco through covered screw conveyors for about 1—4 minutes (healing), which conveyors may optionally be subsequently provided with auxiliary drying air. Then the material may be air-veyed in a stream of hot air or other gas nonreactive with the stucco, such as flue gas, for a time sufficient to evaporate the remaining free moisture. A portion of the flue gas from the calcination process may be returned to the conveying line between water treatment and board formation, and/or the treated material may be passed through a heated cyclone and dust collector bag. Batch drying means may also be employed but are not preferred. In addition, there will be some evaporative drying while transporting the treated material to the board forming machine.

The treated and ground material may be combined with conventional additives in customary amounts to modify various properties of the calcined gypsum for use in making gypsum wallboard or plasters. For example, common chemical dispersing or fluidizing agents for calcined gypsum, such as the lignins, lignosulfates, lignosulfonates and condensation polymerization products thereof may be included in minor amounts to enable the use of even less mixing water without interfering with the water reducing effects accomplished by the present invention. In this manner, it may be possible to achieve even lower total water mixing requirements, such as on the order of about 50 parts by weight of water per 100 parts by weight of the formulated calcined gypsum. The water treatment and healing procedures of this invention reduce the water demand for gypsum board manufacture to about 50 to about 85 parts by weight of water per 100 parts by weight of calcined gypsum, compared to a normal water demand of about 85 to 100 parts by weight of water.

In a highly preferred embodiment, it has now been found that continuously calcined gypsum originally having a surface area of about 3,000—5,500 square centimeters per gram that has been treated with the optimum of about 3% water can obtain a full recoupment of the strength characteristics of the original stucco without any appreciable loss of the water reduction effect by grinding the treated calcined gypsum to increase the surface area. Depending upon the particle size and the strength characteristics of the untreated stucco material, it has been found that at least about 80% of the normal strength can be recaptured by grinding. It is thus generally preferred, for example, on a calcined, natural gypsum material having a surface area of about 3,000 square centimeters per gram

4

and acceptable strength characteristics, to grind the treated material to increase the surface area to about 7,500—9,000 square centimeters per gram (cm²/g), or a surface area of about 2.5 to 3 times the untreated material, in order to recapture the strength characteristics. Calcined gypsum material which has good inherent strength development characteristics and that has been treated with a small amount of water (1—3% by weight) generally requires less increase in surface area for full or nearly full strength recoupment, and in this case, grinding to increase the surface area up to about twice that of the untreated material will be highly satisfactory. On the other hand, calcined gypsum material that has either been treated with a large amount of water (4—10% by weight) or has less inherent original strength development properties ordinarily requires a higher degree of surface area increase generally from about 2.5 to about 4 times the surface area of the untreated material (e.g. 3,000—8,000 cm²/g for chemical process gypsum).

The amount of grinding, however, appears to have variable adverse effects on the water reduction characteristics of the material. As fineness increases there is a gradual impairment of the reduced water demand effect, and as the higher limits of grinding are reached, there is suddenly a dramatic loss of the reduced water demand advantage. Thus, it will be appreciated that the increase in surface area required for a particular treated calcined gypsum depends upon the original material's inherent strength development capabilities, source of the gypsum, particle size of the calcined gypsum before water treatment, amount of water treatment and thoroughness of blending, length of healing time, and amount of strength recoupment desired.

Grinding is accomplished preferably in an impacting apparatus of the type wherein the materials are pulverized by smashing against the side walls of the apparatus such as in an "Alpine" (Trade Mark) or "Raymond" (Trade Mark) impact mill or an "Entoleter" (Trade Mark) mill. Such action is preferred over an abrading type of action in order to maintain uniform size reductions and to reduce the effects of frictional heat that might deleteriously affect the reduced water demand effect. However, depending upon the amount of grinding necessary and the temperature of grinding, abrading apparatus may be suitable for some materials.

The following examples will illustrate various specific embodiments of the process of the present invention. It is to be understood that the examples are by way of illustration only and in no way are to be construed as limitations on the present invention. For example, the hereinafter specific examples were for the preparation of gypsum board and plasters of particular weights, densities and strengths. It is well known to those skilled in the art that strength is primarily dependent upon density; and the present invention maintains the strength-density relationship without regard to how the product will be used, i.e. as to different weights of gypsum board or densities of plaster casts. Thus, while the specific examples refer to a compressive strength at a particular density such is by way of illustration only. For comparison purposes, a standard gypsum board having a density of about 673 kg/m³ (kilograms per cubic meter) weight about 854 kilograms per 100 square meters (kg/100 m²) for a 1.27 cm board, and a standard industrial neat plaster has a dry cube compressive strength of about 17,237 kPa (kilopascal) at about 1.07—1.1 g/cm³ density. It should be understood that other plasters or boards or higher or lower weights and densities may be produced, with correspondingly lower and higher strengths, and such come within the scope of the present invention.

Example 1

In a comparative evaluation, continuously calcined gypsums produced at different locations were treated in a laboratory scale line to incorporate 3% free moisture into the calcined gypsum and then healed. One of the gypsum sources (Source A) was from a location which produces gypsum board of exceptional core strength, and the other source (Source B) was from a location which produces gypsum board of marginal core strength. Source A material ordinarily has a water demand requirement for gypsum board production of about 622 kg/100 m² of 1.27 cm. gypsum board (including both water of hydration and excess water which must be evaporated) and a compressive strength of about 5860 kPa for casts of about .67 g/cm³ density. Source B material ordinarily has a water demand requirement for gypsum board production of about 573 Kg/100 m² of 1.27 cm thick board (also including both water of hydration and excess water) and a compressive strength of about 4137 kPa for casts of about .67 g/cm³ density. Generally at a density of about .67 g/cm³ acceptable board has a slurry cube compressive strength for samples of calcined gypsum pulled off the board line at the slurry mixer approaching 4137 kPa. Laboratory evaluations do not duplicate the intensity of mixing of the board slurry mixer and slurry cube compressive strengths of the same calcined gypsum pulled off the line before the slurry mixer then slurried in laboratory equipment will thus be about 3447—3792 kPa for casts of about .67 g/cm³ density. The particular sample received from Source A when evaluated in the laboratory equipment had a surface area of 5,060 cm²/g and a compressive strength of 3833 kPa for casts of about .67 g/cm³ density. The particular sample received from Source B had a surface area of 4,350 cm²/g and a compressive strength of 3930 kPa for casts of about .67 g/cm³ density.

For these evaluations, charges of the particular calcined gypsum were placed in a Patterson Kelley Company Twin Shell Blender model LP-P-8 equipped with a rotating liquid blending bar. Charges of 4,000 grams of the particular calcined gypsum at room temperature were placed in the unit, and while rotating, 180 gram charges of room temperature water were metered into the calcined gypsum

5

through the blending bar over a period of 40 seconds, and the treated material was allowed to heal for about 3—6 minutes at room temperature. Due to overspray of water sticking to the blender and evaporation during processing, only 3% by weight of free water was present in the calcined gypsum. The treated calcined gypsum was evaluated for strength development and for water demand requirements.

Results of the evaluation are set forth in Table I, with the strength of the treated material being reported as kPa at about .67 g/cm³ density, and water demand requirements reported as percentage of reduced water demand for ease of comparison.

TABLE I

| Material | Original Compressive Strength | Healed Compressive Strength | % Reduced Water Demand |
|---|---|---|---|
| Source A | 3833 kPa | 2082 kPa | 25% |
| Source B | 3551 kPa | 2448 kPa | 25% |

From Table I, it may be seen that the treated materials from both sources developed a 25% reduced water demand, but the strength was greatly decreased by the water treatment. In the case of the marginal strength source material (Source B), the cast strength of the water treated material had a lower percentage of strength loss from the untreated material, but the actual cast strength due to the lower original strength was too low for board production. Both were so low as to be unacceptable for commercial gypsum board.

Additional aliquots of these two source materials were treated as above to incorporate 3% free water at room temperature into the calcined gypsum, healed for 3—4 minutes and then the healed materials were ground on a "Raymond" (Trade Mark) laboratory impact mill. This was a motor-driven pulverizing unit, Model 315UP, equipped with a 15.24 cm diameter grinding chamber and a rotor carrying eight pivoted swing hammers on the grinding disc operating at about 3,600 rpm with various replaceable screens for controlling fineness of the grinding. The unit was operated without any screen in place to obtain surface areas of about 8,000 cm²/g and various sized screens in place for other increases in surface area. Evaluations of strength development and water demand requirements for the materials are set forth in Table II. It should be noted that a goal of about 20% reduction in water demand coupled with about 80% retention of normal strength in the case of naturally high strength gypsum source material, and over 90% of normal strength in the case of marginal or poor surface material, is generally desired for satisfactory commercial board production.

TABLE II

| Material | Ground Surace Area | Compressive Strength | % Reduced Water Demand |
|---|---|---|---|
| Source A | 6040 cm²/g | 3406 kPa | 25% |
| Source A | 8100 cm²/g | 4289 kPa | 20% |
| Source B | 8100 cm²/g | 3909 kPa | 17% |
| Source B | 12550 cm²/g | 5681 kPa | 1% |

From Table II it can be seen that grinding the treated material from both the good and marginal sources to around 8,000 cm²/g (about 20% increase in surface area for Source A material and about 86% increase in surface area for Source B material) still retained much of the water demand reduction while recapturing high percentages of the normal strength. However, in the case of the marginal source material (Source B), increased grinding of that material to about 12,500 cm²/g (about 3 times the surface area of the untreated material) in order to obtain even higher strength totally destroyed the water demand reduction advantage. Source A material with only a 20% increase in surface area was almost in the range of strength for acceptable board e.g. 3447—3792 kPa for laboratory mixed samples.

Example 2

For full sized plant trials to manufacture a completely acceptable gypsum board with the optimum

**0 008 947**

amount (3%) free water in the healed material, a plant operating line was modified to insert in the conveying line, between the continuous calcination equipment and the slurry mixer, a water treater comprising a modified, horizontal, paddle type, continuous mixer. A conventional paddle mixer was modified to have an inlet and opposing outlet for continuous operation instead of batch dump operation and to have an about .95—1.27 cm threaded nipple on the side of the mixer about 15 cm from the calcined gypsum inlet to allow the injection of water at a rate of about 408 kg per hour. The calcined gypsum to be treated had a surface area of about 3500 $cm^2/g$ and was metered horizontally into the mixer in a continuous stream at a rate of about 9072—10866 kg per hour. Blending of the water and calcined gypsum was accomplished as they moved through and were discharged from the mixer, and then, the treated material passed into covered feed screws to provide an about 3-1/2 minute time delay for healing. The healed material was then metered into a rapidly moving airstream in an about 30.48 cm diameter pipe conveying 181 kg per minute of healed material and 1679 standard cubic meters per minute of exhaust gases (from the calcination equipment) having an initial temperature of about 371°C and an exit temperature of about 121°C to air-vey and dry the treated material. The material then passed through a cyclone and dust collector bag for continuous operation and was conveyed to a grinder comprising an "Entoleter" (Trade Mark) centrifugal impact mill having a 12 pin rotor of 68.58 cm diameter operating at 5400 rpm. The material was metered through the "Entoleter" (Trade Mark) impact mill at about 10886 kg per hour and returned into the line feeding the gypsum board production machine, i.e. the slurry mixer.

Properties of samples taken at various times from different locations during the trials, while the various meterings and flow rates were being adjusted after initial stabilization of the system, are set forth in Table III.

TABLE III

|  | Untreated Material with 3500 $cm^2/g$ Surface Area | Partly Healed* | Healed, Dried, with 7000 $cm^2/g$ Surface Area | Healed, Dried, with 9600 $cm^2/g$ Surface Area |
|---|---|---|---|---|
| Water Demand—kg/100 $m^2$— of 1.27 cm board | 607.4 | 550.7 | 483.8 | 446.7 |
| Dispersed Consistency—cc. | 130 | 109 | 85 | 85 |
| Set Suddenness— °C/minute | 5.2 | 4.3 | 4.1 | 5.5 |
| Slurry Cube Strength— kPa at about .67 $g/cm^3$ Density | 5502 | 4399 | 4068 | 5668 |

* About 2% by weight of free water was added, but the material was not dried or ground because strength decreases expected on full 3% free water addition and healing would render board production line inoperable.

The particular continuously calcined gypsum being treated, after water treatment and healing only, would not have been suitable for passing into the gypsum board slurry mixer for production of board because the resultant board would have been too weak. The healed stucco material which had been ground to 7,000 $cm^2/g$ (about 2 times the surface area of the untreated material) was run on the board line for several days. Evaporation of excess water in drying the wet slurry was reduced about 20%; the kiln temperature in three drying zones was reduced about 22%; however, the general board quality including board strength, field hardness and edge hardness was not completely satisfactory for commercial gypsum board. The healed stucco material which had been ground to 9,600 $cm^2/g$ (about 2.75 times the surface area of the untreated material) was run on the board line for several days. At the best runs of that material on the plant line evaporation of excess water in drying the wet slurry was reduced 26%; the kiln speed in three drying zones was increased by 28% while maintaining the normal temperature for ordinary board production using the original continuously calcined gypsum, and the general board quality, including board strength, field hardness and edge hardness, showed substantial improvement over both board made from material ground to 7,000 $cm^2/g$ and previously prepared board produced from unground, healed continuous stucco, From Table III it is quite evident that such should have been the case since the evaluations of castings made from stucco sampled from the line before the board slurry mixer showed that the more finely ground material had more than recaptured the losses in slurry cube strength caused by the water treatment.

7

### Example 3

The process of the present invention was applied to the continuous production of bagged plaster bases. Production of calcined gypsum for plaster products differs from gypsum board production in that a whiter purer gypsum source is used, and it is always batch calcined with special chemicals (e.g. calcium chloride) or other batch process changes to develop lower water demand plasters than are used in gypsum board. Generally, continuous calcination is not suitable for the preparation of such materials because the procedures used to provide lower water demand are not effective at the temperatures of continuous calcination. Further, the resultant plaster product requires different properties from board stucco since it will be mixed with water by the user for a longer period of time and with a different intensity of mixing than is encountered in the slurry mixer for gypsum board production. The end user of plaster is looking for a different fluidity in the wet plaster material than is encountered in the automated gypsum board line, and he rarely foams the slurry as is generally done in the board line. For purposes of plaster manufacture, "dispersed consistency" is determined in a different manner than as defined hereinabove for board production. Here it is the volume of water required to give a standard viscosity when 100 grams of calcined gypsum is dispersed by a sixty second mixing at very high intensity (as in "Waring" (Trade Mark) blender) in order to more thoroughly disperse the calcined gypsum in the water and simulate the mixing conditions encountered by the end user. Ordinarily an industrial plaster base produced from material from the same gypsum source as the material in this Example, but which is batch calcined and contains calcium chloride to reduce the water requirement of the processed plaster, has a 60 second dispersed consistency of 100—105 cc. of water.

For this Example, the continuous calcination equipment ordinarily used in gypsum board production was thoroughly cleaned of its board quality gypsum and filled with a coarser, whiter gypsum rock ordinarily used in batch calcination to produce industrial plasters. After filling the continuous calciner in the normal fashion and operating continuously for a sufficient time to stabilize the system, the calcined gypsum discharging from the calciner was put through the water treater, conveying equipment, hot air drying, cyclone and dust collector bag, and "Entoleter" (Trade Mark) mill as described in Example 2; and then diverted to bins to feed a bagging operation instead of into the gypsum board slurry mixer. Continuously calcined gypsum having a surface area of 3,100 cm²/g was received from the calciner at about 157°C and metered through the paddle blender at a rate of about 9072 kg per hour with water being metered in at a rate of 537 kg per hour to add 5.92% water in the water blender, the water treater discharge temperature being about 102—104.4°C. This added about 3% by weight of free water to the stucco after allowing for evaporation during the healing time of 3-1/2 minutes. The material was then dried as set forth in Example 2, the discharge temperature from the drying cyclone being about 115.6°C. Grinding was accomplished in a 36 pin "Entoleter" (Trade Mark) mill operating at 4,860 rpm, and the treated stucco was passed to a bagger to obtain 22,226 kg of sacked material. Analysis of the material showed that, although it was desirable to adjust the calcination exiting temperatures and holding time-drying temperatures to obtain more complete conversion of the gypsum to hemihydrate, more precise control of free moisture level for healing and more accurate metering to the grinding unit, an industrial plaster base and building plaster white goods base having satisfactory strength and fluidity properties could satisfactorily be produced by continuous calcination.

The same starting material gypsum rock, which had been batch calcined with calcium chloride added, had a 60 second dispersed consistency of 101—105 cc., and dry cube compressive strength of 17,699 kPa at 1.08 g/cm³ density when mixed with water at 75 cc. normal consistency. Samples from various times of the run of this Example treated to contain 3% free water with a healing time of 3—7 minutes, dried and ground to a surface area of 6600 cm²/g (about 2 times the surface area of the untreated material), had a 60 second dispersed consistency of 81—83 cc. and dry cube compressive strength of 17,809 kPa at 1.07 g/cm³ density when mixed with water at 75 cc. normal consistency. Soaking, mixing and other properties were comparable to commercial batch calcined industrial plaster.

### Claims

1. A method for treating calcined gypsum to reduce its water demand in which the calcined gypsum is blended with water and the water treated calcined gypsum is allowed to heal, characterised in that the amount of water used is from about 1% to about 10% by weight of the calcined gypsum (the use of from about 1% to about 8% by weight being known *per se*) and in that the healed calcined gypsum is ground to increase the surface area of the healed calcined gypsum particles.

2. A method according to claim 1 wherein the grinding increases the surface area to up to about 4 times that of the untreated calcined gypsum.

3. A method according to claim 1 wherein the grinding increases the surface area to at least about twice that of the untreated calcined gypsum.

4. A method according to claim 1 wherein the calcined gypsum feed is derived from natural rock gypsum and has a surface area of about 3,000—5,500 square centimeters per gram (Blaine), and the grinding increases the surface area to about 7,500—9,000 square centimeters per gram (Blaine).

5. A method according to claim 1 wherein the calcined gypsum feed is derived from chemical byproduct gypsum and has a surface area of about 1,500—2,000 square centimeters per gram (Blaine), and the grinding increases the surface area to about 3,000—8,000 square centimeters per gram (Blaine).

6. A method according to any of claims 1 to 5 wherein the small amount of water which is blended with the calcined gypsum is in the form of steam.

7. A method according to any of claims 1 to 6 including the step of drying the healed calcined gypsum, preferably at elevated temperature, prior to grinding.

8. A method according to claim 7 wherein the healed and dried calcined gypsum is stored for a period of time prior to the grinding.

9. A process for manufacturing gypsum board which comprises treating calcined gypsum by a method according to any of claims 1 to 8, mixing the treated calcined gypsum with additional water to form a slurry which preferably contains from 50 to 85 parts by weight per 100 parts by weight of calcined gypsum, feeding the slurry to a gypsum board making machine to form wet gypsum board and drying the wet gypsum board.

**Revendications**

1. Procédé pour traiter du gypse calciné ou plâtre pour réduire son besoin en eau, dans lequel le gypse calciné est mélangé avec de l'eau et le gypse calciné traité à l'eau peut s'apaiser, caractérisé en ce que la quantité d'eau utilisée représente 1 % à 10 % du poids du gypse calciné, l'emploi d'environ 1 % à 8 % du poids étant déjà connu, et en ce que le gypse calciné stabilisé est broyé pour augmenter la surface des particules du gypse calciné apaisé.

2. Procédé selon la revendication 1, caractérisé en ce que le broyage augmente la surface des particules jusqu'à environ 4 fois par rapport à celle du gypse calciné non traité.

3. Procédé selon la revendication 1, caractérisé en ce que le broyage augmente la surface des particules au moins deux fois par rapport à celle du gypse calciné.

4. Procédé selon la revendication 1, caractérisé en ce que le gypse calciné est fait à partir de roche naturelle de gypse et a une surface des particules d'environ 3000 à 5500 cm² par gramme (Blaine) et que le broyage augmente la surface des particules à environ 7500 à 9000 cm² par gramme (Blaine).

5. Procédé selon la revendication 1, caractérisé en ce que l'approvisionnement se fait avec un gypse sous-produit chimique, qu'il a une surface des particules d'environ 1500 à 2000 cm² par gramme (Blaine) et que le broyage augmente la surface des particules à environ 3000 à 8000 cm² par gramme (Blaine).

6. Procédé selon l'une des revendications 1 à 5, caractérisé en ce que la petite quantité d'eau qui est mélangée au gypse calciné est introduite sous forme de vapeur.

7. Procédé selon l'une des revendications 1 à 6, caractérisé en ce qu'il comprend une phase de séchage du gypse calciné apaisé, de préférence à haute température, avant le broyage.

8. Procédé selon la revendication 7 dans lequel le gypse calciné apaisé et séché est conservé pendant une période de temps avant le broyage.

9. Procédé pour fabriquer des plaques de plâtre qui comprend les étapes:

traiter le gypse calciné par un procédé selon l'une des revendications 1 à 8,

mélanger le gypse calciné traité avec de l'eau supplémentaire pour former un coulis contenant de préférence entre 50 et 85 parts en poids d'eau pour 100 parts en poids de gypse calciné,

fournir le coulis à une machine pour faire les plaques de plâtre afin de façonner la plaque de plâtre humide et de sécher la plaque de plâtre humide.

**Pantentansprüche**

1. Verfahren zum Behandeln von gebranntem Gips zur Verringerung seines Wasserbedarfs, wobei man den gebrannten Gips mit Wasser vermischt und den mit Wasser behandelten gebrannten Gips ausheilen läßt, dadurch gekennzeichnet, daß man etwa 1 bis etwa 10% Wasser, bezogen auf das Gewicht des gebrannten Gipses verwendet, (wobei die Verwendung von etwa 1 bis etwa 8 Gew.-% Wasser an sich bekannt ist,) und daß man den ausgeheilten gebrannten Gips zur Erhöhung der Oberfläche der Teilchen aus ausgeheilten gebranntem Gips vermahlt.

2. Verfahren gemäß Anspruch 1, dadurch gekennzeichnet, daß man durch das Vermahlen die Oberfläche auf etwa das Vierfache derjenigen des ungehandelten gebrannten Gipses erhöht.

3. Verfahren gemäß Anspruch 1, dadurch gekennzeichnet, daß man durch das Vermahlen die Oberfläche auf mindestens etwa das Doppelte derjenigen des unbehandelten gebrannten Gipses erhöht.

4. Verfahren gemäß Anspruch 1, dadurch gekennzeichnet, daß man als Beschickung gebrannten Gips verwendet, der aus natürlichem Gipsstein stammt und eine Oberfläche von etwa 3000 bis 5500 cm²/g (Blaine) aufweist, und daß man durch das Vermahlen die Oberfläche auf etwa 7500 bis 9000 cm²/g (Blaine) erhöht.

5. Verfahren gemäß Anspruch 1, dadurch gekennzeichnet, daß man als Beschickung gebrannten Gips verwendet, der al Nebenprodukt bei einer chemischen Umsetzung erhalten worden ist und eine Oberfläche von etwa 1500 bis 2000 cm$^2$/g (Blaine) aufweist, und daß man durch das Vermahlen die Oberfläche auf etwa 3000 bis 8000 cm$^2$/g (Blaine) erhöht.

6. Verfahren gemäß einem der Ansprüche 1 bis 5, dadurch gekennzeichnet, daß man die geringe Wassermenge, die mit dem gebrannten Gips vermischt wird, in Form von Wasserdampf einsetzt.

7. Verfahren gemäß einem der Ansprüche 1 bis 6, dadurch gekennzeichnet, daß man außerdem den ausgeheilten gebrannten Gips, vorzugsweise bei erhöhter Temperatur, vor dem Vermahlen trocknet.

8. Verfahren gemäß Anspruch 7, dadurch gekennzeichnet, daß man den ausgeheilten, getrockneten, gebrannten Gips eine Zeitlang vor dem Vermahlen aufbewahrt.

9. Verfahren zur Herstellung von Gipsplatten, dadurch gekennzeichnet, daß man gebrannten Gips nach einem Verfahren gemäß einem der Ansprüche 1 bis 8 behandelt, daß man den behandelten, gebrannten Gips mit zusätzlichem Wasser und der Bildung einer Aufschlämmung versetzt, die vorzugsweise je 100 Gewichsteile 50 bis 85 Gewichsteile gebrannten Gips enthält, daß man die Aufschlämmung einer Gipsplattenherstellungsmaschine zur Bildung von feuchten Gipsplatten zuführt und daß man die feuchten Gipsplatten trocknet.